# EUROPÄISCHE PATENTSCHRIFT

(11) **EP 3 420 424 B1**
(45) Veröffentlichungstag und Bekanntmachung des Hinweises auf die Patenterteilung: **03.04.2024**
(21) Anmeldenummer: 17707494.5
(22) Anmeldetag: 16.02.2017
(51) Int. Cl.: G05B 19/418, B29C 45/76

(54) **VERFAHREN ZUR DURCHFÜHRUNG EINES ZYKLISCHEN PRODUKTIONSPROZESSES**
METHOD FOR CARRYING OUT A CYCLICAL PRODUCTION PROCESS
PROCEDE D'EXECUTION D'UN PROCEDE DE PRODUCTION CYCLIQUE

(30) Priorität: 22.02.2016 EP 16156730
(43) Veröffentlichungstag der Anmeldung: 02.01.2019
(73) Patentinhaber: Kistler Holding AG, 8408 ZH Winterthur (CH)
(72) Erfinder: FICK, Daniel, 8280 Kreuzlingen (CH); HAAG, Günter, 70599 Stuttgart (DE); MEYER, Dirk, 70182 Stuttgart (DE); LIEDL, Philipp, 73730 Esslingen (DE)
(86) Internationale Anmeldenummer: PCT/EP2017/053510
(87) Internationale Veröffentlichungsnummer: WO 2017/144344

(56) Entgegenhaltungen:
- DE-A1-102010 002 174
- DE-C1- 19 801 881
- Kistler Gruppe: "Betriebsanleitung CoMo Injection Typ 2869B...", Internet, Juni 2013 (2013-06), XP002760971, Gefunden im Internet: URL:https://www.kistler.com/?type=669&fid= 34510&model=document&callee=frontend [gefunden am 2016-08-19]
- Kistler Group: "Kistler News Plastics", Internet, 2015, XP002760972, Gefunden im Internet: URL:https://www.kistler.com/?type=669&fid= 196&model=download [gefunden am 2016-08-19]
- Haman, Soromo: "Prozessnahes Qualitätsmanagement beim Spritzgießen", Internet, 4. Juni 2004 (2004-06-04), XP002760973, Gefunden im Internet: URL:http://monarch.qucosa.de/fileadmin/dat a/qucosa/documents/4864/data/Dissertation. pdf [gefunden am 2016-08-19]

## Beschreibung

### Technisches Gebiet

Die Erfindung betrifft ein Verfahren zur Durchführung eines zyklischen Produktionsprozesses nach dem Oberbegriff des unabhängigen Anspruchs.

### Stand der Technik

Ein zyklischer Produktionsprozess zeichnet sich durch zeitlich sich wiederholende Aktivitäten bei der industriellen Produktion aus. Ein Produktionszyklus ist vollständig, wenn alle Aktivitäten abgearbeitet sind. Beispiele für einen zyklischen Produktionsprozess sind Verfahren zum Urformen wie Giessen, Spritzgiessen, Sintern, usw.. Auf einer Produktionsanlage können somit zeitlich sich wiederholend Güter produziert werden, was die Produktionskosten tief hält. Auf ein und derselben Produktionsanlage lassen sich gleiche Güter mit gleichen Eigenschaften und oft auch verschiedene Güter mit ähnlichen Eigenschaften produzieren, im letzteren Fall muss die Produktionsanlage jedoch für jedes Gut güterspezifisch umgerüstet werden. Nachfolgend wird die Erfindung anhand eines Spritzgiessprozesses beschrieben, was aber eine Verwendung der Erfindung in anderen Verfahren zum Urformen nicht ausschliesst.

Um Güter mit gleichbleibender Qualität zu produzieren, beschreibt die Schrift WO2011101177A1 ein Verfahren zur Durchführung eines Spritzgiessprozesses, bei dem Sensordaten einer Spritzgiessmaschine von Sensoren erfasst und ausgewertet werden. Sensordaten sind Werkzeuginnendrucke, Temperaturwerte, usw.. Die auf der Spritzgiessmaschine produzierten Güter sind Spritzgiessbauteile. Bei einer Online-Kontrolle wird automatisch und zeitnah während des laufenden Produktionsprozesses kontrolliert, ob ein Qualitätsmerkmal der produzierten Spritzgiessbauteile innerhalb einer Qualitätstoleranz der produzierten Spritzgiessbauteile liegt, also ob es sich um Gutteile handelt. Qualitätsmerkmal und Qualitätstoleranz sind vordefiniert. Ein Arbeitspunkt der Spritzgiessmaschine wird über Prozesseinstellgrössen eingestellt. Prozesseinstellgrössen sind eine Einspritzgeschwindigkeit, eine Nachdruckhöhe, usw.. Eine Stabilität des Spritzgiessprozesses wird über eine Vielzahl von Prozesskenngrössen überwacht. Prozesskenngrössen sind aus dem zeitlichen Verlauf von erfassten Sensordaten abgeleitete Werte wie ein Maximalwert von Sensordaten in einer Zeitdauer, eine zeitspezifische Steigung von Sensordaten, eine Zeitdauer von Sensordaten wie eine Nachdruckzeit, usw.. Aus so ermittelten Prozesskenngrössen lässt sich ein Abdriften des Spritzgiessprozesses aus der Stabilität erkennen. Um die Qualität der produzierten Spritzgiessbauteile innerhalb der Qualitätstoleranz der produzierten Spritzgiessbauteile zu halten, wird der Arbeitspunkt der Spritzgiessmaschine über die Prozesseinstellgrössen verändert. Dabei werden unterschiedliche Prozesseinstellgrössen in einer hierarchischen Abfolge verändert, so dass von der Reaktionszeit der Spritzgiessmaschine zeitkritische Prozesseinstellgrössen wenn möglich nicht oder nur sehr langsam verändert werden.

Die Druckschriften Kistler Gruppe: "Betriebsanleitung CoMo Injection Typ 2869B...", DE 198 01 881 C1 und Kistler Group: "Kistler News Plastics" offenbaren Verfahren zur Überwachung eines Produktionsprozesses mittels Werkzeuginnendruckverläufen und zugehörigen Überwachungsfenstern.

Aufgabe der vorliegenden Erfindung ist es, ein Verfahren zur Durchführung eines zyklischen Produktionsprozesses weiter zu verbessern.

### Darstellung der Erfindung

Diese Aufgabe wird durch die Merkmale des unabhängigen Anspruchs gelöst.

Die Erfindung beruht auf der Erkenntnis, dass eine ermittelte Prozesskenngrösse anhand der die Stabilität des Produktionsprozesses überwacht wird, alleine schon durch alltägliche äussere Einflüsse wie Lufttemperatur, Luftdruck, Luftfeuchtigkeit variieren kann. Um sicherzustellen, dass die Stabilität des Produktionsprozesses nicht schon durch solch alltägliche äussere Einflüsse beeinträchtigt wird und Qualitätseinbusse mit Ausschuss zur Folge hat, erfolgt erfindungsgemäss die Bildung einer Prozesskenngrössenzone, innerhalb welcher der Produktionsprozess stabil ist und Gutteile produziert werden. Die Bildung der Prozesskenngrössenzone erfolgt bei einer Einstellung des Produktionsprozesses, also vor dem eigentlichen Produktionsprozess und simuliert Änderungen des Produktionsprozesses. Einzelne Verfahrensschritte bei der Bildung der Prozesskenngrössenzone erfolgen automatisiert. Ein automatisierter Vorgang im Sinne der Erfindung ist ein selbsttätiges Arbeiten ohne Einwirkung eines Bedieners einer Produktionsanlage des Produktionsprozesses. So wird für eine geänderte Prozesseinstellgrösse automatisiert mindestens eine Prozesskenngrössenvariante ermittelt und es wird automatisiert geprüft, ob sich die ermittelte Prozesskenngrössenvariante innerhalb einer Prozessstabilitätsgrenze befindet und prozessstabil ist. Dies hat den Vorteil, dass der Bediener durch das erfindungsgemässe Verfahren bei einer Einstellung des Produktionsprozesses unterstützt und systematisch angeleitet wird, was Zeit und Aufwand spart.

Vorteilhafterweise wird der Produktionsprozess daraufhin mit der Prozesskenngrössenzone einfach und zeitnah überwacht. Dazu wird im Produktionszyklus des nun laufenden Produktionsprozesses vorteilhafterweise mindestens eine Prozesskenngrösse ermittelt und überwacht. In einer Alternative wird vorteilhafterweise überwacht, ob die ermittelte Prozesskenngrösse innerhalb der Prozesskenngrössenzone liegt. Falls ja, wird eine Überwachungsinformation ausgegeben, dass der Produktionszyklus Güter produziert, deren Qualitätsmerkmal innerhalb der Qualitätstoleranz der produzierten Güter liegt. Kleine Variationen der ermittelten Prozesskenngrösse, die innerhalb eines Sicherheitsabstandes zu Prozesskenngrössengrenzwerten der Prozesskenngrössenzone stattfinden, können dann ausser Acht gelassen werden, da sie keine Qualitätseinbusse mit Ausschuss zur Folge haben. Eine eigentliche Kontrolle, ob das Qualitätsmerkmal der produzierten Güter tatsächlich innerhalb der Qualitätstoleranz der produzierten Güter liegt, ist im laufenden Produktionsprozess dann also nicht mehr nötig, was wiederum Zeit und Aufwand spart.

### Kurze Beschreibung der Zeichnungen

Im Folgenden wird die Erfindung beispielhaft unter Beizug der Figuren näher erklärt. Es zeigen
- Fig. 1: schematisch die Bestandteile einer Spritzgiessmaschine zur Durchführung eines zyklischen Produktionsprozesses;
- Fig. 2: schematisch Verfahrensschritte der Bildung einer Prozesskenngrössenzone für eine Spritzgiessmaschine nach Fig. 1;
- Fig. 3: eine graphische Darstellung einer in einem Verfahrensschritte nach Fig. 2 ermittelten ersten Prozesskenngrössenvariante;
- Fig. 4: eine graphische Darstellung einer in einem Verfahrensschritte nach Fig. 2 ermittelten zweiten Prozesskenngrössenvariante;
- Fig. 5: eine graphische Darstellung einer in einem Verfahrensschritte nach Fig. 2 ermittelten dritten Prozesskenngrössenvariante;
- Fig. 6: eine graphische Darstellung eines Verfahrensschrittes nach Fig. 2 zur Bildung einer Prozessstabilitätsgrenze mit Prozesskenngrössenvarianten nach Fig. 3 bis 5;
- Fig. 7: eine graphische Darstellung einer in Verfahrensschritten nach Fig. 2 gebildeten ersten Ausführungsform einer Prozesskenngrössenzone;
- Fig. 8: eine graphische Darstellung einer in Verfahrensschritten nach Fig. 2 gebildeten zweiten Ausführungsform einer Prozesskenngrössenzone;
- Fig. 9: eine graphische Darstellung einer in Verfahrensschritten nach Fig. 2 gebildeten dritten Ausführungsform einer Prozesskenngrössenzone;
- Fig. 10: eine graphische Darstellung einer Überlagerung einer ermittelten Prozesskenngrösse eines Produktionszyklus eines laufenden Produktionsprozesses mit der ersten Ausführungsform der Prozesskenngrössenzone nach Fig. 7; und
- Fig. 11: eine graphische Darstellung einer Überlagerung einer ermittelten Prozesskenngrösse eines Produktionszyklus eines laufenden Produktionsprozesses mit der dritten Ausführungsform der Prozesskenngrössenzone nach Fig. 9.

### Wege zur Ausführung der Erfindung

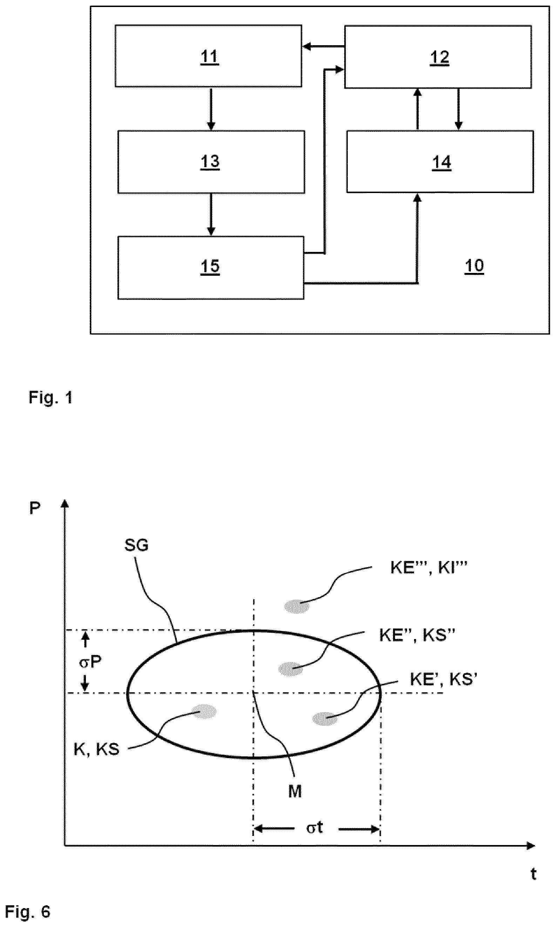

Fig. 1 zeigt schematisch die Bestandteile einer Spritzgiessmaschine 10 zur Durchführung eines zyklischen Produktionsprozesses. Im Produktionsprozess werden Spritzgiessbauteile als Güter produziert. Die Spritzgiessmaschine 10 umfasst mehrere, nicht weiter im Detail dargestellte und beschriebene Bestandteile 11 wie die eigentliche Maschine mit Pumpe und Schnecke, ein Werkzeug zur Formteilbindung, Temperiergeräte, Materialzuführung, Vorrichtungen zur Kontrolle der produzierten Spritzgiessbauteile, eine Ausschussweiche, usw.. Mindestens ein Sensor 13 erfasst Sensordaten der Bestandteile 11. Die Sensordaten sind ein Werkzeuginnendruck, ein Temperaturwert, usw.. Über mindestens eine Prozesseinstellgrösse ist der Produktionsprozess einstellbar. Die Prozesseinstellgrösse ist eine Einspritzgeschwindigkeit, eine Nachdruckhöhe, usw.. Die Prozesseinstellgrösse lässt sich auf einer Ein- und Ausgabevorrichtung 12 wie einer Tastatur, ein berührungsempfindlicher Bildschirm, usw. eingeben und darstellen. Die Ein- und Ausgabevorrichtung 12 ist vorteilhafterweise Teil eines Computers.

Eine Steuereinheit 14 führt die eigentliche Steuerung des Produktionsprozesses durch. Die Steuereinheit 14 weist dazu mindestens einen Datenspeicher und einen Prozessor auf. Im Datenspeicher lassen sich Daten wie erfasste Sensordaten, die eingegebene Prozesseinstellgrösse, usw. speichern. Im Prozessor lassen sich Algorithmen zur Steuerung des Produktionsprozesses ausführen. Die Steuereinheit 14 ist vorteilhafterweise ebenfalls Teil des Computers. Bei Kenntnis der vorliegenden Erfindung kann der Fachmann anstelle der Steuereinheit auch eine Reglereinheit einsetzen, welche Reglereinheit dann die Prozesseinstellgrösse regelt.

Eine Qualitätskontrolle der produzierten Spritzgiessbauteile erfolgt in einer Kontrolleinheit 15. In der Kontrolleinheit 15 wird kontrolliert, ob mindestens ein vom Sensor 13 erfasstes Qualitätsmerkmal der produzierten Spritzgiessbauteile innerhalb mindestens einer Qualitätstoleranz der produzierten Spritzgiessbauteile liegt, ob Gutteile produziert worden sind. Das Qualitätsmerkmal und die Qualitätstoleranz sind vordefiniert. Das Qualitätsmerkmal und die Qualitätstoleranz sind für ein Spritzgiessbauteil ein Gewicht, eine Masshaltigkeit, eine Grösse, eine Gratbildung, eine Formfüllung, eine Brandstelle, usw.. Die Qualitätstoleranz ist vorzugsweise im Datenspeicher gespeichert. Das Qualitätsmerkmal, die Qualitätstoleranz sowie das Ergebnis der Kontrolle ob Gutteile produziert worden sind werden auf der Ein- und Ausgabevorrichtung 12 dargestellt.

Zum Eingeben der Prozesseinstellgrösse und zur Steuerung des Produktionsprozesses sind die Bestandteile 11, die Ein- und Ausgabevorrichtung 12 und die Steuereinheit 14 über Signalleitungen miteinander verbunden. In Fig. 1 sind Signalleitungen als Pfeile dargestellt. Auch zur Erfassung der Sensordaten und zur Übermittlung der erfassten Sensordaten sind die Bestandteile 11, der Sensor 13 und die Kontrolleinheit 15 über Signalleitungen miteinander verbunden. Weiter sind zur Darstellung des Ergebnisses der Kontrolle die Kontrolleinheit 15 und die Ein- und Ausgabevorrichtung 12 über eine Signalleitung miteinander verbunden. Und zur Übermittlung der erfassten Sensordaten sind die Kontrolleinheit 15 und die Steuereinheit 14 über eine Signalleitung miteinander verbunden.

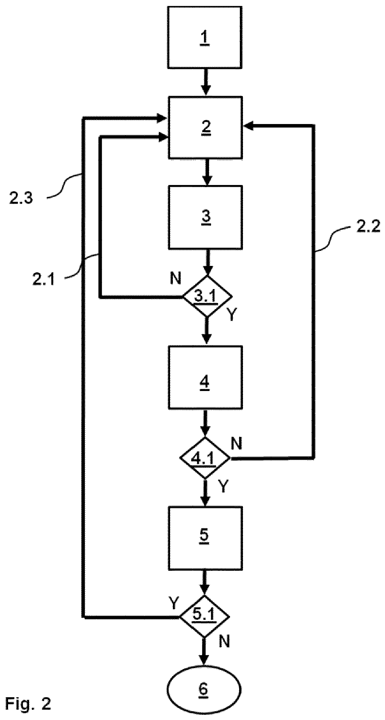

Fig. 2 zeigt schematisch Verfahrensschritte der Bildung einer Prozesskenngrössenzone. In einem ersten Verfahrensschritt 1 wird eine Prozesseinstellgrösse vorgegeben. Die vorgegebene Prozesseinstellgrösse ist vorzugsweise im Datenspeicher gespeichert und wird auf der Ein- und Ausgabevorrichtung 12 dargestellt. Der Produktionsprozess ist mit der vorgegebenen Prozesseinstellgrösse stabil durchführbar und produziert Gutteile. Sensordaten des mit der vorgegebenen Prozesseinstellgrösse betriebenen Produktionsprozesses sind auch vorgegeben. Die vorgegebenen Sensordaten sind vorzugsweise ebenfalls im Datenspeicher gespeichert und werden ebenfalls auf der Ein- und Ausgabevorrichtung 12 dargestellt. Mindestens eine Prozesskenngrösse ist auch vorgegeben und vorzugsweise ebenfalls im Datenspeicher gespeichert und wird ebenfalls auf der Ein- und Ausgabevorrichtung 12 dargestellt. Eine Prozesskenngrösse ist ein aus dem zeitlichen Verlauf von Sensordaten abgeleiteter Wert wie ein Maximalwert von Sensordaten in einer Zeitdauer, eine zeitspezifische Steigung von Sensordaten, eine Zeitdauer von Sensordaten wie eine Nachdruckzeit, ein Mittelwert von Sensordaten, usw.. Konkrete Beispiele für eine Prozesskenngrösse einer Spritzgiessmaschine sind ein Werkzeuginnendruckmaximalwert und eine Werkzeugwandtemperaturmittelwert. Die Darstellung der Prozesseinstellgrösse, der Sensordaten, der Qualitätstoleranz, des Ergebnisses der Kontrolle ob Gutteile produziert worden sind und der Prozesskenngrösse kann graphisch und/oder alphanumerisch erfolgen. Bei Kenntnis der vorliegenden Erfindung kann die Darstellung der Prozesseinstellgrösse, der Sensordaten und der Prozesskenngrösse auch auf einem von der Ein- und Ausgabevorrichtung 12 verschiedenen Bildschirm oder auch als Ausdruck auf Papier erfolgen.

Im Verfahrensschritt 2 wird mindestens eine Prozesseinstellgrösse geändert. Eine Differenz zwischen der geänderten Prozesseinstellgrösse und der Prozesseinstellgrösse wird als Änderungsbetrag bezeichnet und ist von Null verschieden. Verfahrensschritt 2 erfolgt automatisiert. Die Bildung der Prozesskenngrössenzone simuliert also Änderungen der Prozesseinstellgrösse. Vorzugsweise werden die zwei Prozesseinstellgrössen Einspritzgeschwindigkeit und Nachdruckhöhe geändert. Bei Kenntnis der vorliegenden Erfindung kann der Fachmann die Darstellung der geänderten Prozesseinstellgrösse graphisch und/oder alphanumerisch auf der Ein- und Ausgabevorrichtung oder auf einem von der Ein- und Ausgabevorrichtung verschiedenen Bildschirm oder auch als Ausdruck auf Papier realisieren.

Im weiteren Verfahrensschritt 3 wird geprüft, ob der Produktionsprozess mit der geänderten Prozesseinstellgrösse stabil durchführbar ist, also ob Prozessstabilität vorliegt. Verfahrensschritt 3 erfolgt automatisiert. Die Prüfung der Prozessstabilität erfolgt mit Prozesskenngrössen, welche mit den Prozesseinstellgrössen korreliert sind. Eine Prozesseinstellgrösse ist mit mindestens einer Prozesskenngrösse korreliert. Die Korrelation ist spezifisch für die Spritzgiessmaschine 10 und den zyklischen Produktionsprozess. Die Korrelation hängt von alltäglichen äusseren Einflüssen ab, sie ist daher schwer zu bestimmen und bleibt in der Regel auch unbestimmt. Wenn beispielsweise als Prozesseinstellgrösse eine bestimmte Einspritzgeschwindigkeit eingestellt wird, so wird als Prozesskenngrösse ein dazu korrelierter Werkzeuginnendruckmaximalwert ermittelt. Wird die Prozesseinstellgrösse geändert, beispielsweise wird die Einspritzgeschwindigkeit erniedrigt oder erhöht, so wird die Prozesskenngrösse entsprechend der Korrelation variiert. Prozessstabilität liegt vor, wenn sich die ermittelten Prozesskenngrössenvarianten innerhalb einer Prozessstabilitätsgrenze befinden. Mehr Details dazu folgen in der Beschreibung zu Fig. 6.

In noch einem weiteren Verfahrensschritt 4 wird kontrolliert, ob ein vom Sensor 13 erfasstes Qualitätsmerkmal der mit der geänderten Prozesseinstellgrösse produzierten Spritzgiessbauteile innerhalb einer Qualitätstoleranz der produzierten Spritzgiessbauteile liegt, also ob Gutteile vorliegen. Vorzugsweise weist die Spritzgiessmaschine 10 mehrere Kavitäten auf, in denen in einem Produktionszyklus gleichzeitig parallel mehrere Güter produziert werden. Beispielsweise werden pro Produktionszyklus acht Güter produziert, von denen sieben Gutteile und eines ein Schlechtteil ist. Bei einer Nulltoleranz bei der Qualität müssen alle acht Güter Gutteile sein.

Falls eine Entscheidung 3.1 entscheidet, dass keine Prozessstabilität vorliegt (Nein N), wird Verfahrensschritt 2 in Iteration 2.1 im nächsten Produktionszyklus solange mit einer geänderten Prozesseinstellgrösse wiederholt, bis Prozessstabilität erreicht ist. Falls nach einer vorbestimmten Anzahl von Produktionszyklen keine Prozessstabilität erreicht wird, wird in Iteration 2.1 der Verfahrensschritt 2 mit einer geänderten Prozesseinstellgrösse wiederholt, deren Absolutwert des Änderungsbetrages kleiner als derjenige der letzten Prozesseinstellgrösse ist. Entscheidung 3.1 erfolgt automatisiert.

Falls in Entscheidung 3.1 entschieden wird, dass Prozessstabilität vorliegt (Ja Y), wird Verfahrensschritt 4 überprüft, ob Gutteile oder Schlechtteile produziert worden sind. Vorzugsweise wird Entscheidung 4.1 durch einen Bediener der Spritzgiessmaschine 10 vorgenommen. Vorzugsweise entnimmt der Bediener an der Kontrolleinheit 15 produzierte Spritzgiessbauteile und kontrolliert sie.

Falls in Entscheidung 4.1 entschieden wird, dass nicht alle produzierten Güter Gutteile sind (Nein N), wird Verfahrensschritt 2 in Iteration 2.2 mit einer geänderten Prozesseinstellgrösse wiederholt. Vorzugsweise wird in Iteration 2.2 der Verfahrensschritt 2 mit einer geänderten Prozesseinstellgrösse wiederholt, deren Absolutwert des Änderungsbetrages kleiner als derjenige der letzten Prozesseinstellgrösse ist.

Falls in Entscheidung 4.1 entschieden wird, dass alle produzierten Güter Gutteile sind (Ja Y), wird im folgenden Verfahrensschritt 5 die ermittelte Prozesskenngrössenvariante der Prozesskenngrössenzone zugeordnet. Verfahrensschritt 5 erfolgt automatisiert. Nun wird entschieden, ob die Bildung der Prozesskenngrössenzone weitergeführt werden soll. Falls in Entscheidung 5.1 entschieden wird, dass die Bildung der Prozesskenngrössenzone nicht weitergeführt werden soll (Nein N), erfolgt im Verfahrensschritt 6 ein Abschluss. Falls in Entscheidung 5.1 entschieden wird, dass die Bildung der Prozesskenngrössenzone weitergeführt werden soll (Ja Y), wird Verfahrensschritt 2 in Iteration 2.3 mit einer geänderten Prozesseinstellgrösse wiederholt. Vorzugsweise wird in Iteration 2.3 der Verfahrensschritt 2 mit einer geänderten Prozesseinstellgrösse wiederholt, deren Absolutwert des Änderungsbetrages grösser als derjenige der letzten Prozesseinstellgrösse ist. Vorzugsweise wird Entscheidung 5.1 durch einen Bediener der Spritzgiessmaschine 10 vorgenommen.

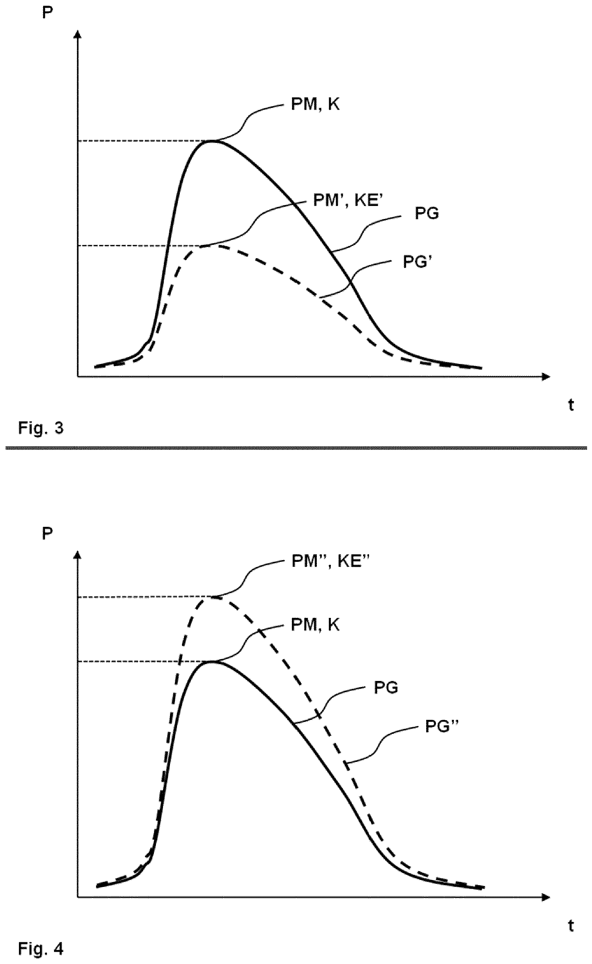

Die Fig. 3 bis 5 zeigen eine graphische Darstellung der Ermittlung von Prozesskenngrössenvarianten KE', KE", KE‴. Dazu wird eine Prozesseinstellgrösse vorgegeben, beispielsweise wird als Prozesseinstellgrösse eine Einspritzgeschwindigkeit von 24mm/sec vorgegeben, mit welcher Prozesseinstellgrösse der Produktionsprozess stabil durchführbar ist und nur Gutteile produziert. Als Sensordaten werden Werkzeuginnendrucke eines Produktionszyklus vorgegeben. Der Produktionszyklus dauert beispielsweise 20sec. Dimensionen des Werkzeuginnendruckes sind ein Druck P und eine Zeit t. Im Koordinatensystem der Fig. 3 bis 5 sind der Druck P als Ordinate und die Zeit t als Abszisse aufgetragen. Der zeitliche Verlauf der vorgegebenen Werkzeuginnendrucke ist als Werkzeuginnendruckkurve PG dargestellt. Ein Werkzeuginnendruckmaximalwert PM der Werkzeuginnendruckkurve PG ist die vorgegebene Prozesskenngrösse K. Bei Kenntnis der vorliegenden Erfindung kann der Fachmann die Darstellung der Ermittlung der Prozesskenngrössenvariante graphisch und/oder alphanumerisch auf der Ein- und Ausgabevorrichtung 12 oder auf einem von der Ein- und Ausgabevorrichtung 12 verschiedenen Bildschirm oder auch als Ausdruck auf Papier realisieren. Bei einer alphanumerischen Darstellung wird der zeitliche Verlauf des vorgegebenen Werkzeuginnendruckes dann als Zahlenfolge dargestellt und der Werkzeuginnendruckmaximalwert wird dann als Zahlenwert dargestellt.

Fig. 3 zeigt eine graphische Darstellung der Ermittlung einer ersten Prozesskenngrössenvariante KE'. Vorzugsweise werden zuerst Prozesskenngrössenvarianten ermittelt, die in der Dimension Druck P kleiner als die zu variierende vorgegebene Prozesskenngrösse K (Werkzeuginnendruckmaximalwert PM) sind. Somit wird die Einspritzgeschwindigkeit auf 22mm/sec abgesenkt (Verfahrensschritt 2). Diese abgesenkte Einspritzgeschwindigkeit ist die geänderte Prozesseinstellgrösse. Die Spritzgiessmaschine 10 wird mit der abgesenkten Einspritzgeschwindigkeit betrieben und Sensordaten des mit der abgesenkten Einspritzgeschwindigkeit betriebenen Produktionsprozesses werden als erste Werkzeuginnendrucke erfasst. Erfasste erste Werkzeuginnendrucke sind in Fig. 3 als erste Werkzeuginnendruckkurve PG` dargestellt. Ein Werkzeuginnendruckmaximalwert PM' der ersten Werkzeuginnendruckkurve PG` bildet die erste Prozesskenngrössenvariante KE'. Die Ermittlung von Varianten der vorgegebenen Prozesskenngrösse K lässt sich beliebig oft wiederholen. Vorzugsweise werden möglichst wenige Varianten der vorgegebenen Prozesskenngrösse K ermittelt, um Zeit und Aufwand zu sparen. Vorzugsweise werden zwei, vorzugsweise werden fünf Varianten der vorgegebenen Prozesskenngrösse K ermittelt, die in der Dimension Druck P kleiner als die zu variierende Prozesskenngrösse K sind.

Fig. 4 zeigt eine graphische Darstellung der Ermittlung einer zweiten Prozesskenngrössenvariante KE". Vorzugsweise werden nun Prozesskenngrössenvarianten ermittelt, die in der Dimension Druck P grösser als die zu variierende vorgegebenen Prozesskenngrösse K (Werkzeuginnendruckmaximalwert PM) sind. Somit wird die Einspritzgeschwindigkeit auf 26mm/sec angehoben (Verfahrensschritt 2). Diese angehobene Einspritzgeschwindigkeit ist die geänderte Prozesseinstellgrösse. Die Spritzgiessmaschine 10 wird mit der angehobenen Einspritzgeschwindigkeit betrieben und Sensordaten des mit der angehobenen Einspritzgeschwindigkeit betriebenen Produktionsprozesses werden als zweite Werkzeuginnendrucke erfasst. Erfasste zweite Werkzeuginnendrucke sind in Fig. 4 als zweite Werkzeuginnendruckkurve PG" dargestellt. Ein Werkzeuginnendruckmaximalwert PM" der zweiten Werkzeuginnendruckkurve PG" bildet die zweite Prozesskenngrössenvariante KE". Vorzugsweise werden zwei, vorzugsweise werden fünf Varianten der vorgegebenen Prozesskenngrösse K ermittelt, die in der Dimension Druck P grösser als die zu variierende vorgegebene Prozesskenngrösse K sind.

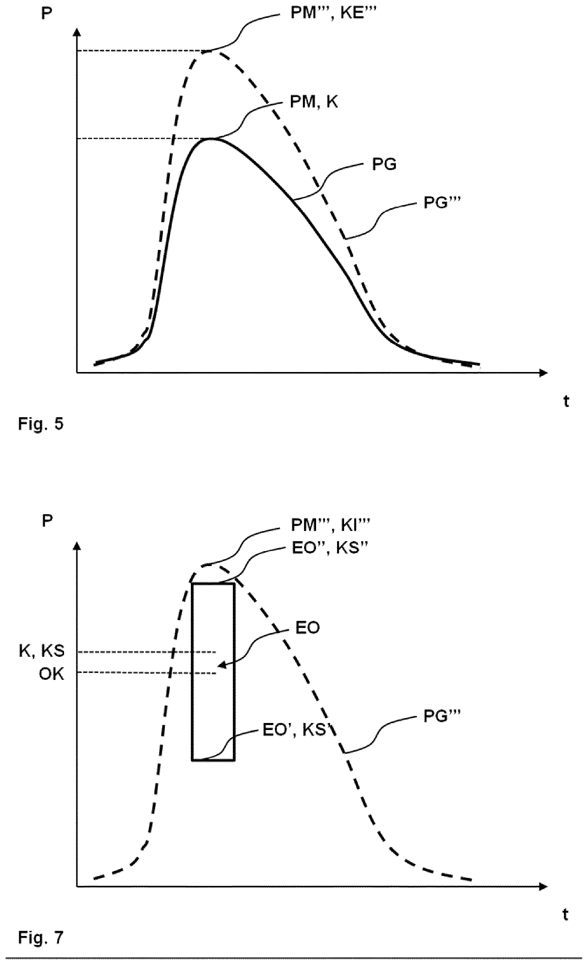

Fig. 5 zeigt eine graphische Darstellung der Ermittlung einer dritten Prozesskenngrössenvariante KE‴. So wird die Einspritzgeschwindigkeit auf 27mm/sec angehoben (Verfahrensschritt 2). Diese angehobene Einspritzgeschwindigkeit ist die geänderte Prozesseinstellgrösse. Die Spritzgiessmaschine 10 wird mit der angehobenen Einspritzgeschwindigkeit betrieben und Sensordaten des mit der angehobenen Einspritzgeschwindigkeit betriebenen Produktionsprozesses werden als dritte Werkzeuginnendrucke erfasst. Erfasste dritte Werkzeuginnendrucke sind in Fig. 5 als dritte Werkzeuginnendruckkurve PG‴ dargestellt. Ein Werkzeuginnendruckmaximalwert PM‴ der dritten Werkzeuginnendruckkurve PG‴ bildet die dritte Prozesskenngrössenvariante KE‴.

Fig. 6 zeigt eine graphische Darstellung der Prüfung der Prozessstabilität (Verfahrensschritt 3). Beispielsweise wird der Werkzeuginnendruckmaximalwert PM einer Werkzeuginnendruckkurve PG als Prozesskenngrösse K verwendet und die Werkzeuginnendruckmaximalwerte PM', PM", PM‴ von Werkzeuginnendruckkurven PG', PG", PG‴ werden als Prozesskenngrössenvarianten KE`, KE", KE‴ verwendet. Die Prozesskenngrösse K ist gemäss der Beschreibung der Fig. 3 bis 5 vorgegeben. Die Prozesskenngrössenvarianten KE', KE", KE‴ werden gemäss der Beschreibung der Fig. 3 bis 5 aus Sensordaten ermittelt. Vorzugsweise ist jede Prozesskenngrösse K und jede Prozesskenngrössenvariante KE', KE", KE‴ bereits ein Mittelwert aus mehreren Produktionszyklen. Mit der Prozesskenngrösse K und den Prozesskenngrössenvarianten KE', KE", KE‴ wird in einem statistischen Auswahlverfahren mindestens ein Prozessstabilitätskriterium wie eine Standardabweichung σP in der Dimension Druck P, eine Standardabweichung σt in der Dimension Zeit t, ein arithmetischer Mittelwert M, usw. ermittelt. Prozessstabilität liegt vor, wenn sind die Prozesskenngrösse K und die Prozesskenngrössenvarianten KE', KE", KE‴ innerhalb einer Prozessstabilitätsgrenze SG befinden. In Fig. 6 ist der arithmetische Mittelwert M der Prozesskenngrösse K und der Prozesskenngrössenvarianten KE', KE", KE‴ in einem Mittelpunkt eines Ellipsoides angeordnet. Eine Halbachse des Ellipsoides entlang der Ordinate mit dem Druck P als Dimension kann ein Einfaches oder Mehrfaches der Standardabweichung σP sein. Eine Halbachse des Ellipsoides entlang der Abszisse mit der Zeit t als Dimension kann ein Einfaches oder Mehrfaches der Standardabweichung σt sein. Ein Umfang des Ellipsoides kann die Prozessstabilitätsgrenze sein. Die Prozesskenngrösse K und die Prozesskenngrössenvarianten KE', KE", KE‴ sind als vier Punkte dargestellt. Drei der vier Punkte befinden sich innerhalb der Ellipsoide, ein Punkt befindet sich ausserhalb der Ellipsoide. Die durch drei sich innerhalb der Ellipsoide befindende Punkte dargestellte vorgegebene Prozesskenngrösse K und die erste und die zweite Prozesskenngrössenvariante KE', KE" sind prozessstabil und werden auch prozessstabile Prozesskenngrösse KS und prozessstabile Prozesskenngrössenvarianten KS', KS" bezeichnet. Die durch den sich ausserhalb der Ellipsoide befindenden Punkt dargestellte dritte Prozesskenngrössenvariante KE‴ ist prozessinstabil und wird als prozessinstabile Prozesskenngrössenvarianten KI‴ bezeichnet. Bei Kenntnis der vorliegenden Erfindung kann nicht nur die Prozesskenngrösse im Datenspeicher gespeichert sein, sondern auch die prozessstabilen Prozesskenngrössenvarianten können im Datenspeicher gespeichert sein und sind als vorgegebene prozessstabile Prozesskenngrössenvarianten aus dem Datenspeicher ladbar. Somit existieren prozessstabile Prozesskenngrössenvarianten, mit denen sich in einem statistischen Auswahlverfahren eine Prozessstabilitätsgrenze bilden lässt.

Im Verfahrensschritt 4 wird kontrolliert, ob mit einer geänderten Prozesseinstellgrösse produzierte Spritzgiessbauteile Gutteile sind. Vorzugsweise erfolgt eine Kontrolle nur für solche produzierten Spritzgiessbauteile, deren geänderte Prozesseinstellgrösse mit einer prozessstabilen Prozesskenngrössenvariante KS', KS" korreliert ist. Die entsprechenden Vorrichtungen zur Kontrolle der produzierten Spritzgiessbauteile kontrollieren mindestens ein Qualitätsmerkmal wie ein Gewicht der produzierten Spritzgiessbauteile, eine Masshaltigkeit der produzierten Spritzgiessbauteile, eine Grösse der produzierten Spritzgiessbauteile, eine Gratbildung an produzierten Spritzgiessbauteilen, eine Vollständigkeit der Formfüllung bei der Produktion der Spritzgiessbauteile, Brandstellen an produzierten Spritzgiessbauteilen, usw.. Für jedes Qualitätsmerkmal ist mindestens eine entsprechende Qualitätstoleranz vordefiniert. Wenn ein Qualitätsmerkmal der produzierten Spritzgiessbauteile innerhalb einer Qualitätstoleranz der produzierten Spritzgiessbauteile liegt, werden die produzierten Spritzgiessbauteile als Gutteile klassiert (Entscheidung 4.1).

In Verfahrensschritt 5 wird eine ermittelte Prozesskenngrössenvariante KE', KE ", KE‴ der Prozesskenngrössenzone zugeordnet. Als Bedingung für eine Zuordnung zur Prozesskenngrössenzone muss die ermittelte Prozesskenngrössenvariante KE', KE", KE‴ prozessstabil sein und die ermittelte Prozesskenngrössenvariante KE', KE", KE‴ muss mit einer geänderten Prozesseinstellgrösse korreliert sein, mit der im Produktionsprozess Gutteile produziert werden. Im Beispiel nach Fig. 6 sind die erste und die zweite Prozesskenngrössenvariante KE', KE" prozessstabil (und werden auch als erste und zweite prozessstabile Prozesskenngrössenvarianten KS', KS" bezeichnet) und mit einer geänderten Prozesseinstellgrösse korreliert, mit der im Produktionsprozess Gutteile produziert werden. Somit wird mit den prozessstabilen Prozesskenngrössenvarianten KS', KS" die Prozesskenngrössenzone EO gebildet.

Fig. 7 zeigt eine graphische Darstellung einer ersten Ausführungsform einer Prozesskenngrössenzone EO aus zwei prozessstabilen Prozesskenngrössenvarianten KS', KS". Die erste prozessstabile Prozesskenngrössenvariante KS' ist ein erster Werkzeuginnendruckmaximalwert PM' der ersten Werkzeuginnendruckkurve PG` (siehe Fig. 3). Die zweite prozessstabile Prozesskenngrössenvariante KS" ist ein zweiter Werkzeuginnendruckmaximalwert PM" der zweiten Werkzeuginnendruckkurve PG" (siehe Fig. 4). Die erste prozessstabile Prozesskenngrössenvariante KS` ist bezüglich der Dimension Druck P kleiner als die zweite prozessstabile Prozesskenngrössenvariante KS". Somit bildet die erste prozessstabile Prozesskenngrössenvariante KS' einen ersten Prozesskenngrössengrenzwert EO' der Prozesskenngrössenzone EO und die zweite prozessstabile Prozesskenngrössenvariante KS" bildet einen zweiten Prozesskenngrössengrenzwert EO" der Prozesskenngrössenzone EO. Vorzugsweise ist die Prozesskenngrössenzone EO polygonal und in der ersten Ausführungsform nach Fig. 7 ist die Prozesskenngrössenzone EO rechteckig, derart, dass der erste Prozesskenngrössengrenzwert EO' eine untere Seite des Rechtecks bildet und der zweite Prozesskenngrössengrenzwert EO" eine obere Seite des Rechtecks bildet. Bei Kenntnis der vorliegenden Erfindung kann der Fachmann die Darstellung der Prozesskenngrössenzone graphisch und/oder alphanumerisch auf der Ein- und Ausgabevorrichtung oder auf einem von der Ein- und Ausgabevorrichtung verschiedenen Bildschirm oder auch als Ausdruck auf Papier realisieren. Auch kann der Fachmann eine Prozesskenngrössenzone bilden, die aus einer einzigen prozessstabilen Prozesskenngrössenvariante besteht. In diesem Fall ist die Prozesskenngrössenzone dann linienförmig, punktförmig, usw..

Eine optimierte Prozesskenngrösse OK ist in der Prozesskenngrössenzone EO zentriert angeordnet. Die optimierte Prozesskenngrösse OK ist äquidistant zu den Prozesskenngrössengrenzwerten EO', EO" angeordnet. Die optimierte Prozesskenngrösse OK ist also symmetrisch zwischen den Prozesskenngrössengrenzwerten EO', EO" angeordnet und weist somit einen möglichst grossen Sicherheitsabstand zu den Prozesskenngrössengrenzwerten EO', EO" auf. Vorzugsweise ist die mit der vorgegebenen Prozesseinstellgrösse korrelierte vorgegebene Prozesskenngrösse K prozessstabil (und wird auch als prozessstabile Prozesskenngrösse KS bezeichnet) und asymmetrisch angeordnet, der Sicherheitsabstand zum ersten Prozesskenngrössengrenzwert EO' ist grösser als derjenige zum zweiten Prozesskenngrössengrenzwert EO". Die optimierte Prozesskenngrösse OK ist eine Orientierungshilfe bei der Überwachung der Prozesskenngrössen des laufenden Produktionsprozesses. So lässt sich eine mit der Prozesskenngrösse korrelierte Prozesseinstellgrösse prophylaktisch ändern, wenn sich Prozesskenngrössen des laufenden Produktionsprozesses von der optimierten Prozesskenngrösse OK entfernen und sich einem Prozesskenngrössengrenzwert EO', EO" nähern.

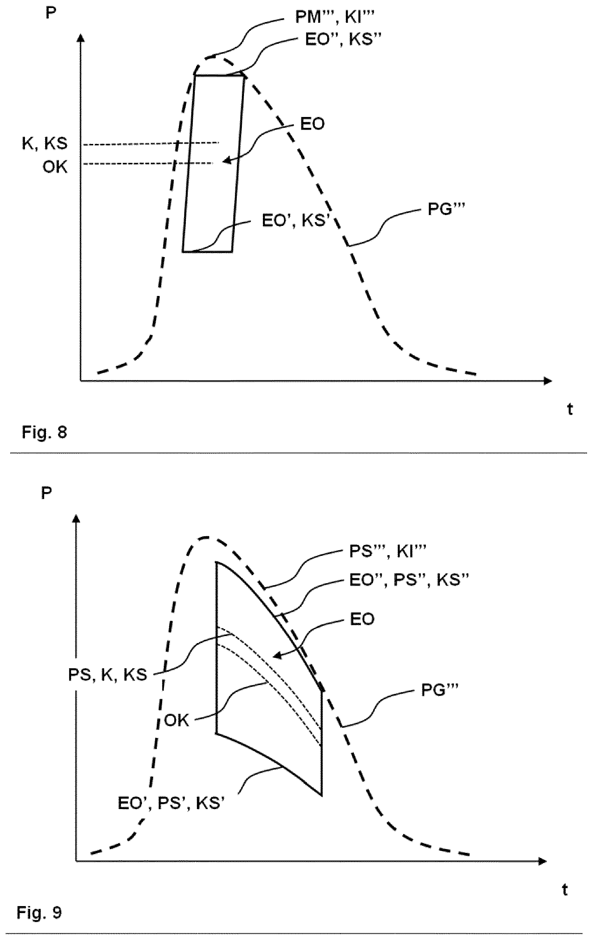

Bei Kenntnis der vorliegenden Erfindung kann der Fachmann auch andere Ausführungsformen von Prozesskenngrössenzonen EO realisieren, wie in Fig. 8 und 9 dargestellt. Die Beschreibung der Fig. 8 und 9 basiert auf derjenigen der Fig. 7, so dass im Folgenden nur Abweichungen dazu erläutert werden. In der zweiten Ausführungsform einer Prozesskenngrössenzone EO nach Fig. 8 ist die Prozesskenngrösse EO ein Parallelogramm, derart, dass der erste Prozesskenngrössengrenzwert EO' eine untere Seite des Parallelogramms bildet und der zweite Prozesskenngrössengrenzwert EO" eine obere Seite des Parallelogramms bildet.

In der dritten Ausführungsform einer Prozesskenngrössenzone EO nach Fig. 9 ist die Prozesskenngrösse EO ein Polygon mit geraden und/oder gekrümmten Seiten, derart, dass der erste Prozesskenngrössengrenzwert EO' eine untere Seite des Polygons bildet und der zweite Prozesskenngrössengrenzwert EO" eine obere Seite des Polygons bildet. Als vorgegebene Prozesskenngrösse K und prozessstabile Prozesskenngrössenvarianten KS', KS" werden Werkzeuginnendrucksteigungen PS, PS', PS" der Werkzeuginnendruckkurven PG, PG', PG" verwendet. Als prozessinstabile Prozesskenngrössenvarianten Kʺʺ wird eine Werkzeuginnendrucksteigung PS‴ der Werkzeuginnendruckkurven PG‴ verwendet.

Die Prozesskenngrössenzone EO ist eine Überwachungsmaske für einen Produktionszyklus des laufenden Produktionsprozesses, bei dem mindestens eine Prozesskenngrösse KE aus Sensordaten ermittelt wird. Vorzugsweise wird der zeitliche Verlauf der ermittelten Prozesskenngrösse KE graphisch als Werkzeuginnendruckkurve PME dargestellt. Vorzugsweise wird die Prozesskenngrössenzone EO mit der ermittelten Prozesskenngrösse KE und/oder mit der Werkzeuginnendruckkurve PME überlagert. Vorzugsweise erfolgt die Überlagerung in Echtzeit, der Produktionszyklus ist dann der aktuell stattfindende Produktionszyklus des laufenden Produktionsprozesses. Falls ja wird eine Überwachungsinformation ausgegeben, dass der Produktionszyklus des laufenden Produktionsprozesses Gutteile produziert. Bei Kenntnis der vorliegenden Erfindung kann der Fachmann die Überlagerung der Prozesskenngrössenzone EO mit der erfassten Prozesskenngrösse und/oder der Werkzeuginnendruckkurve graphisch und/oder alphanumerisch auf der Ein- und Ausgabevorrichtung oder auf einem von der Ein- und Ausgabevorrichtung verschiedenen Bildschirm oder auch als Ausdruck auf Papier realisieren.

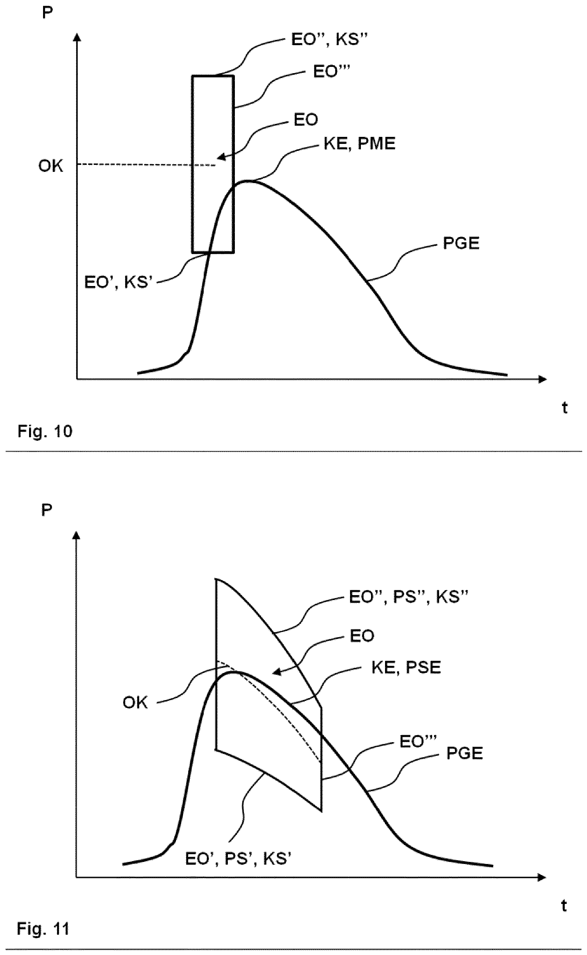

Nach Fig. 10 wird als Prozesskenngrösse KE ein Werkzeuginnendruckmaximalwert PME eines Produktionszyklus des laufenden Produktionsprozesses ermittelt. Nach Fig. 11 wird als Prozesskenngrösse KE eine Werkzeuginnendrucksteigung PSE eines Produktionszyklus des laufenden Produktionsprozesses ermittelt.

Erfindungsgemäß wird überwacht, ob die ermittelte Prozesskenngrösse KE innerhalb der Prozesskenngrössenzone EO liegt. Im Sinne der Erfindung befindet sich eine ermittelte Prozesskenngrösse KE, welche einen Prozesskenngrössengrenzwert EO', EO ", EO‴ berührt oder schneidet, auch innerhalb der Prozesskenngrössenzone EO. Falls die ermittelte Prozesskenngrösse KE innerhalb der Prozesskenngrössenzone EO liegt, wird eine Überwachungsinformation ausgegeben, dass der Produktionszyklus Gutteile produziert. Nach Fig. 10 liegt der Werkzeuginnendruckmaximalwert PME ausserhalb der Prozesskenngrössenzone EO, so dass eine Überwachungsinformation ausgegeben, dass der Produktionszyklus keine Gutteile produziert. Nach Fig. 11 liegt die Werkzeuginnendrucksteigung PSE innerhalb der Prozesskenngrössenzone EO, so dass eine Überwachungsinformation ausgegeben, dass der Produktionszyklus Gutteile produziert.

In einer Alternative wird überwacht, ob die Werkzeuginnendruckkurve PGE bereichsweise innerhalb der Prozesskenngrössenzone EO liegt. Falls die Werkzeuginnendrucckurve PGE bereichsweise innerhalb der Prozesskenngrössenzone EO liegt, wird eine Überwachungsinformation ausgegeben, dass der Produktionszyklus Gutteile produziert. Nach Fig. 10 und 11 liegt die Werkzeuginnendruckkurve PGE bereichsweise innerhalb der Prozesskenngrössenzone EO, so dass eine Überwachungsinformation ausgegeben, dass der Produktionszyklus Gutteile produziert.

In einer weiteren Alternative wird überwacht, ob die Werkzeuginnendruckkurve PGE mindestens einen Prozesskenngrössenzonengrenzwert EO', EO ", EO‴ der Prozesskenngrössenzone EO schneidet. Es wird überwacht, ob die Werkzeuginnendruckkurve PGE den ersten Prozesskenngrössenzonengrenzwert EO' schneidet. Falls die Werkzeuginnendruckkurve PGE den ersten Prozesskenngrössenzonengrenzwert EO' schneidet, wird eine Überwachungsinformation ausgegeben, dass der Produktionszyklus Gutteile produziert. Nach Fig. 10 schneidet die Werkzeuginnendruckkurve PGE den ersten Prozesskenngrössenzonengrenzwert EO`, so dass eine Überwachungsinformation ausgegeben, dass der Produktionszyklus Gutteile produziert. Nach Fig. 11 schneidet die Werkzeuginnendruckkurve PGE nicht den ersten Prozesskenngrössenzonengrenzwert EO', so dass eine Überwachungsinformation ausgegeben, dass der Produktionszyklus keine Gutteile produziert.

In noch einer weiteren Alternative wird eine bezüglich der Dimension Zeit t grösste erfasste Prozesskenngrössenvariante als dritter Prozesskenngrössengrenzwert EO‴ der Prozesskenngrössenzone verwendet. Es wird überwacht, ob die Werkzeuginnendruckkurve PGE den dritten Prozesskenngrössenzonengrenzwert EO‴ schneidet. Falls die Werkzeuginnendrucckurve PGE den dritten Prozesskenngrössenzonengrenzwert EO‴ schneidet, wird eine Überwachungsinformation ausgegeben, dass der Produktionszyklus Gutteile produziert. Nach Fig. 10 und 11 schneidet die Werkzeuginnendruckkurve PGE den dritten Prozesskenngrössenzonengrenzwert EO‴, so dass eine Überwachungsinformation ausgegeben, dass der Produktionszyklus Gutteile produziert.

Bei Kenntnis der vorliegenden Erfindung kann der Fachmann die verschiedenen Alternativen der Überwachung der ermittelten Prozesskenngrösse und/oder der Werkzeuginnendruckkurve mit der Prozesskenngrössenzone miteinander kombinieren. So kann überwacht werden, ob die Werkzeuginnendrucckurve PGE den ersten Prozesskenngrössenzonengrenzwert EO' und den dritten Prozesskenngrössenzonengrenzwert EO‴ schneidet. Falls die Werkzeuginnendruckkurve PGE die beiden Prozesskenngrössenzonengrenzwerte EO', EO‴ schneidet, wird eine Überwachungsinformation ausgegeben, dass der Produktionszyklus Gutteile produziert. Nach Fig. 10 schneidet die Werkzeuginnendruckkurve PGE die beiden Prozesskenngrössenzonengrenzwerte EO', EO‴, so dass eine Überwachungsinformation ausgegeben, dass der Produktionszyklus Gutteile produziert. Nach Fig. 11 schneidet die Werkzeuginnendruckkurve PGE nicht die beiden Prozesskenngrössenzonengrenzwert EO', EO‴, so dass eine Überwachungsinformation ausgegeben, dass der Produktionszyklus keine Gutteile produziert.

Die Ausführungsformen der Prozesskenngrössenzone EO sind mit der Art des Qualitätsmerkmals der produzierten Spritzgiessbauteile und der Art der Qualitätstoleranz der produzierten Spritzgiessbauteile abgestimmt. Die Ausführungsformen der Prozesskenngrössenzone EO lassen sich auch miteinander kombinieren. Im Spritzgiessprozess erfolgt ja eine Formteilbildung in den Phasen Füllen einer Kavität mit einer Schmelze, Komprimieren der Schmelze und Erstarren des Formteils. Die ersten beiden Phasen finden vor dem Werkzeuginnendruckmaximum statt, die dritte Phase findet danach statt. Für eine Kontrolle der Vollständigkeit der Formfüllung (Short Shot) bei der Produktion der Spritzgiessbauteile wird vorzugsweise eine polygonale Prozesskenngrössenzone EO mit dem Werkzeuginnendruckmaximalwert als Prozesskenngrösse verwendet. Für eine Kontrolle von Brandstellen an produzierten Spritzgiessbauteilen wird vorzugsweise eine polygonale Prozesskenngrössenzone EO mit der Werkzeuginnendrucksteigung als Prozesskenngrösse verwendet (Fig. 11). Für eine Kontrolle der Masshaltigkeit von produzierten Spritzgiessbauteilen und/oder der Grösse von produzierten Spritzgiessbauteilen und/oder einer Gratbildung an produzierten Spritzgiessbauteilen wird vorzugsweise eine polygonale Prozesskenngrössenzone EO mit dem Werkzeuginnendruckmaximalwert als Prozesskenngrösse verwendet (Fig. 10) und/oder es wird eine polygonale Prozesskenngrössenzone EO mit der Werkzeuginnendrucksteigung als Prozesskenngrösse verwendet (Fig. 11).

Auch in einem Produktionszyklus des laufenden Produktionsprozesses kann eine ermittelte Prozesskenngrösse KE zur Prozesskenngrössenzone EO hinzugefügt werden. Dazu muss die ermittelte Prozesskenngrösse KE prozessstabil sein und die ermittelte Prozesskenngrösse KE muss mit einer Prozesseinstellgrösse korreliert sein, mit der in dem Produktionsprozess Gutteile produziert werden. Mit solch einer der Prozesskenngrössenzone EO hinzugefügten ermittelten Prozesskenngrösse KE lassen sich Prozesskenngrössenzonengrenzwerte EO', EO", EO‴ der Prozesskenngrössenzone EO anpassen und bezüglich einer Dimension wie dem Druck P verschieben.

### Bezugszeichenliste

- 1 - 6: Verfahrensschritte
- 2.1, 2.2, 2.3: Iteration
- 3.1, 4.1, 5.1: Entscheidung
- 10: Spritzgiessmaschine
- 11: Bestandteile
- 12: Ein- und Ausgabevorrichtung
- 13: Sensor
- 14: Steuereinheit
- 15: Kontrolleinheit
- EO: Prozesskenngrössenzone
- EO', EO", EO‴: Prozesskenngrössengrenzwert
- OK: optimierte Prozesskenngrösse
- P: Werkzeuginnendruck
- PG - PG‴: Werkzeuginnendruckkurve
- PGE: erfasste Werkzeuginnendruckkurve
- PM - PM‴: Werkzeuginnendruckmaximalwert
- PME: erfasster Werkzeuginnendruckmaximalwert
- PS - PS‴: Werkzeuginnendrucksteigung
- PSE: erfasste Werkzeuginnendrucksteigung
- K: vorgegebene Prozesskenngrösse
- KE: ermittelte Prozesskenngrösse
- KE', KE", KE‴: ermittelte Prozesskenngrössenvariante
- KI‴: prozessinstabile Prozesskenngrössenvariante
- KS: prozessstabile Prozesskenngrösse
- KS', KS": prozessstabile Prozesskenngrössenvariante
- SG: Prozessstabilitätsgrenze
- σK, σt: Standardabweichung
- t: Zeit

## Patentansprüche

1. Verfahren zur Durchführung eines zyklischen Produktionsprozesses, bei welchem Produktionsprozess Güter produziert werden; wobei der Produktionsprozess über mindestens eine Prozesseinstellgrösse eingestellt wird; und wobei mindestens ein Qualitätsmerkmal der produzierten Güter und mindestens eine Qualitätstoleranz der produzierten Güter vordefiniert werden;
a) wobei mindestens eine Prozesseinstellgrösse automatisiert geändert wird;
b) wobei für eine geänderte Prozesseinstellgrösse automatisiert mindestens eine Prozesskenngrössenvariante (KE', KE", KE‴) ermittelt wird;
c) wobei automatisiert geprüft wird, ob sich die ermittelte Prozesskenngrössenvariante (KE', KE ", KE‴) innerhalb einer Prozessstabilitätsgrenze (SG) befindet und prozessstabil ist;
wobei, falls eine Entscheidung entscheidet, dass keine Prozessstabilität vorliegt, Verfahrensschritt a) im nächsten Produktionszyklus solange mit einer geänderten Prozesseinstellgrösse wiederholt wird, bis Prozessstabilität erreicht ist;
d) wobei kontrolliert wird, ob das Qualitätsmerkmal der mit einer geänderten Prozesseinstellgrösse produzierten Güter innerhalb der Qualitätstoleranz der produzierten Güter liegt und somit Gutteile produziert worden sind; und
e) wobei mit mindestens einer ermittelten Prozesskenngrössenvariante (KE', KE", KE"), die prozessstabil ist und deren Prozesseinstellgrösse Gutteile produziert, automatisiert eine Prozesskenngrössenzone (EO) gebildet wird,
wobei die Prozesskenngrössenzone (EO) eine Überwachungsmaske für einen Produktionszyklus des laufenden Produktionsprozesses ist, bei dem mindestens eine Prozesskenngrösse (KE) aus Sensordaten ermittelt wird, 11
wobei überwacht wird, ob die ermittelte Prozesskenngrösse (KE) innerhalb der Prozesskenngrössenzone (EO) liegt, wobei, falls die ermittelte Prozesskenngrösse (KE) innerhalb der Prozesskenngrössenzone (EO) liegt, eine Überwachtungsinformation ausgegeben wird, dass der Produktionszyklus Gutteile produziert.

2. Verfahren nach Anspruch 1, **dadurch gekennzeichnet, dass** mit einer bezüglich einer Dimension einer Prozesskenngrösse kleinsten Prozesskenngrössenvariante (KE', KE") ein erster Prozesskenngrössenzonengrenzwert (EO') der Prozesskenngrössenzone (EO) ermittelt wird; und/oder dass mit einer bezüglich einer Dimension der Prozesskenngrösse grössten Prozesskenngrössenvariante (KE', KE") ein zweiter Prozesskenngrössenzonengrenzwert (EO") der Prozesskenngrössenzone (EO) ermittelt wird.

3. Verfahren nach einem der Ansprüche 1 oder 2, **dadurch gekennzeichnet, dass** für eine geänderte Prozesseinstellgrösse mindestens eine prozessstabile Prozesskenngrössenvariante (KS', KS") existiert, mit welcher prozessstabilen Prozesskenngrössenvariante (KS', KS") in einem statistischen Auswahlverfahren mindestens eine Prozessstabilitätsgrenze (SG) gebildet wird.

4. Verfahren nach Anspruch 3, **dadurch gekennzeichnet, dass** eine Prozesseinstellgrösse vorgegeben wird, welche Prozesseinstellgrösse mit mindestens einer Prozesskenngrösse (K) korreliert ist, welche Prozesskenngrösse (K) ebenfalls vorgegeben ist; und dass die prozessstabile Prozesskenngrössenvariante (KS', KS") aus Sensordaten ermittelt wird.

5. Verfahren nach Anspruch 3, **dadurch gekennzeichnet, dass** mit der vorgegebenen Prozesskenngrösse (K) und der prozessstabilen Prozesskenngrössenvariante (KS', KS") ein arithmetischer Mittelwert (M) und eine Standardabweichung (σP, σt) ermittelt werden; dass der arithmetische Mittelwert (M) in einem Mittelpunkt eines Ellipsoides angeordnet wird; und dass mit der Standardabweichung (σP, σt) ein Einfaches oder Mehrfaches von Halbachsen des Ellipsoides gebildet werden; und dass die Prozessstabilitätsgrenze (SG) durch einen Umfang des Ellipsoides gebildet wird.

6. Verfahren nach einem der Ansprüche 3 bis 5, **dadurch gekennzeichnet, dass** die Kontrolle ob Gutteile produziert worden sind nur für solche produzierten Güter durchgeführt wird, deren geänderte Prozesseinstellgrösse mit einer prozessstabilen Prozesskenngrössenvariante (KS', KS") korreliert ist.

7. Verfahren nach Anspruch 6, **dadurch gekennzeichnet, dass** falls die ermittelte Prozesskenngrösse (KE) bereichsweise innerhalb der Prozesskenngrössenzone (EO) liegt, eine Überwachungsinformation ausgegeben wird, dass der Produktionszyklus Gutteile produziert.

8. Verfahren nach Anspruch 6, **dadurch gekennzeichnet, dass** ein zeitlicher Verlauf der ermittelten Prozesskenngrösse (KE) graphisch dargestellt wird; dass die graphische Darstellung der ermittelten Prozesskenngrösse (KE) mit der Prozesskenngrössenzone (EO) überlagert wird; dass überwacht wird, ob die graphische Darstellung der ermittelten Prozesskenngrösse (KE) bereichsweise innerhalb der Prozesskenngrössenzone (EO) liegt; dass falls die graphische Darstellung der ermittelten Prozesskenngrösse (KE) bereichsweise innerhalb der Prozesskenngrössenzone (EO) liegt, eine Überwachungsinformation ausgegeben wird, dass der Produktionszyklus Gutteile produziert.

9. Verfahren nach Anspruch 8, **dadurch gekennzeichnet, dass** für einen Produktionszyklus des laufenden Produktionsprozesses Werkzeuginnendrucke als Prozesskenngrösse (KE) verwendet wird; dass der zeitliche Verlauf der erfassten Werkzeuginnendrucke graphisch als Werkzeuginnendruckkurve (PGE) dargestellt wird; dass die Werkzeuginnendruckkurve (PGE) mit der Prozesskenngrössenzone (EO) überlagert wird; dass überwacht wird, ob die Werkzeuginnendruckkurve (PGE) bereichsweise innerhalb der Prozesskenngrössenzone (EO) liegt; und dass falls die Werkzeuginnendruckkurve (PGE) bereichsweise innerhalb der Prozesskenngrössenzone (EO) liegt, eine Überwachungsinformation ausgegeben wird, dass der Produktionszyklus Gutteile produziert.

10. Verfahren nach einem der Ansprüche 7 bis 9, **dadurch gekennzeichnet, dass;** dass überwacht wird, ob die graphische Darstellung der ermittelten Prozesskenngrösse (KE) mindestens einen Prozesskenngrössenzonengrenzwert (EO', EO", EO‴) schneidet.

11. Verfahren nach einem der Ansprüche 1 bis 10, **dadurch gekennzeichnet, dass** der Produktionsprozesses ein Spritgiessprozess ist, bei dem als vorgegebene Prozesseinstellgrösse eine Einspritzgeschwindigkeit und/oder eine Nachdruckhöhe verwendet wird und bei dem als Güter Spritzgiessbauteile produziert werden.

12. Verfahren nach Anspruch 11, **dadurch gekennzeichnet, dass** als Prozesskenngrösse ein Werkzeuginnendruckmaximalwert (PM, PM', PM", PM‴, PME) und/oder eine Werkzeuginnendrucksteigung (PS, PS', PS", PS‴, PSE) verwendet wird.

13. Verfahren nach Anspruch 11, **dadurch gekennzeichnet, dass** für eine Kontrolle einer Vollständigkeit einer Formfüllung (Short Shot) bei der Produktion der Spritzgiessbauteile eine polygonale Prozesskenngrössenzone (EO) mit dem Werkzeuginnendruckmaximalwert (PM, PM', PM", PM‴, PME) als Prozesskenngrösse verwendet wird.

14. Verfahren nach Anspruch 11, **dadurch gekennzeichnet, dass** für eine Kontrolle einer Masshaltigkeit von produzierten Spritzgiessbauteilen und/oder einer Grösse von produzierten Spritzgiessbauteilen und/oder einer Gratbildung an produzierten Spritzgiessbauteilen eine polygonale Prozesskenngrössenzone (EO) mit dem Werkzeuginnendruckmaximalwert (PM, PM', PM", PM''', PME) als Prozesskenngrösse oder mit der Werkzeuginnendrucksteigung (PS, PS', PS", PS‴, PSE) als Prozesskenngrösse verwendet wird.

## Claims

1. A process for performing a cyclic production process wherein articles are produced in said production process; where the production process is set via at least one process control variable; and wherein at least one quality characteristic of the articles produced and at least one quality tolerance range for the articles produced are predefined;
a) whereby at least one process control variable is varied;
b) whereby for a varied process control variable at least one process parameter variation (KE `, KE", KE‴) is determined automatically;
c) whereby checking is performed automatically whether the process parameter variation (KE `, KE", KE‴) determined lies within a process stability limit (SG) and is stable in the process;
whereby, if a decision decides that the process is not stable, process step a) will be repeated in the next production cycle with a varied process control variable until process stability is achieved;
d) whereby checking is performed automatically whether the quality characteristic of the articles produced with a varied process control variable is within the quality tolerance range for the articles produced and therefore acceptable parts have been produced; and
e) whereby with at least one process parameter variation (KE', KE", KE''') determined which is stable in the process and the process control variable of which results in the production of acceptable parts a process parameter zone (EO) is established automatically,
whereby the process parameter zone (EO) serves as a control mask for a production cycle of the ongoing production process, wherein at least one process parameter (KE) is determined from sensor data,
whereby monitoring is performed if the determined process parameter (KE) lies within the process parameter zone (EO), if the determined process parameter (KE) lies within the process parameter zone (EO) monitoring information is issued that the production cycle of the ongoing production process produces acceptable parts.

2. The process according to claim 1, **characterized in that** a first process parameter zone limit (EO`) of the process parameter zone (EO) is determined using a process parameter variation (KE`, KE") which is the smallest with respect to a dimension of a process parameter; and/or that a second process parameter zone limit (EO") of the process parameter zone (EO) is determined using a process parameter variation (KE`, KE") that is the highest with respect to a dimension of the process parameter.

3. The process according to any of claims 1 or 2 **characterized in that** for a varied process control variable at least one stable process parameter variation (KS', KS") exists wherein said stable process parameter variation (KS', KS") is used to establish at least one process stability limit (SG) in a statistical selection procedure.

4. The process according to claim 3, **characterized in that** a process control variable is predetermined wherein said process control variable is correlated with at least one process parameter (K) said process parameter (K) being also predetermined; and **in that** said stable process parameter variation (KS', KS") is determined from sensor data.

5. The process according to claim 3, **characterized in that** using said predetermined process parameter (K) and said stable process parameter variation (KS`, KS") an arithmetic mean (M) and a standard deviation (σP, σt) are determined; that the arithmetic mean (M) is positioned in a center of an ellipsoid; and that using said standard deviation (σP, σt) a single or multiple of half-major axes of the ellipsoid are established; and that the process stability limit (SG) is established by a perimeter of the ellipsoid.

6. The process according to any of claims 3 to 5, **characterized in that** checking whether acceptable parts have been produced is performed only for such articles produced the varied process control variable of which is correlated with a stable process parameter variation (KS`, KS").

7. The process according to claim 6, **characterized in that** if the determined process parameter (KE) lies within the process parameter zone (EO) in certain areas monitoring information is issued that the production cycle of the ongoing production process produces acceptable parts.

8. The process according to claim 6, **characterized in that** a development of the process parameter (KE) determined with time is represented graphically; that the graphical representation of the process parameter (KE) determined is superimposed with the process parameter zone (EO); that checking whether said graphical representation of the process parameter (KE) determined lies within the process parameter zone (EO) is carried out; and if the graphical representation of the process parameter (KE) determined lies within the process parameter zone (EO), that monitoring information is issued that the production cycle produces acceptable parts.

9. The process according to claim 8, **characterized in that** for a production cycle of the ongoing production process cavity pressures are used as a process parameter (KE); that the development of the cavity pressures detected with time is represented graphically as a cavity pressure curve (PGE); that the cavity pressure curve (PGE) is superimposed with the process parameter zone (EO); that checking whether the cavity pressure curve (PGE) lies within the process parameter zone (EO) in certain areas is performed; and if the cavity pressure curve (PGE) lies within the process parameter zone (EO) in certain areas that monitoring information is issued that the production cycle produces acceptable parts.

10. The process according to any of claims 7 to 9, **characterized in that** checking whether the graphical representation of the process parameter (KE) determined intersects at least one process parameter zone limit (EO`, EO", EO‴) is performed.

11. The process according to any of claims 1 to 10, **characterized in that** the production process is an injection molding process wherein an injection speed and/or a holding pressure is used as the predetermined process control variable and wherein injection molded parts are produced as the articles.

12. The process according to claim 11, **characterized in that** a cavity pressure maximum value (PM, PM', PM", PM‴, PME) and/or a cavity pressure slope (PS, PS', PS", PS‴, PSE) is used as the process parameter.

13. The process according to claim 11, **characterized in that** for checking completeness of a mold filling (Short Shot) in the production of injection molded parts a polygonal process parameter zone (EO) with the cavity pressure maximum value (PM, PM', PM", PM‴, PME) as the process parameter is used.

14. The process according to claim 11, **characterized in that** for checking a dimensional accuracy of injection molded parts produced and/or a size of injection molded parts produced or a burr formation on injection molded parts produced a polygonal process parameter zone (EO) with the cavity pressure maximum value (PM, PM', PM'', PM''', PME) as the process parameter or with the cavity pressure slope (PS, PS', PS", PS‴, PSE) as the process parameter is used.

## Revendications

1. Procédé pour exécuter un processus cyclique de production, processus de production qui conduit à la production des articles ; dans lequel ledit processus de production est réglé par au moins une valeur de réglage du processus ; et dans lequel au moins une caractéristique de qualité des articles produits et au moins une plage de tolérance de qualité des articles produits sont prédéfinies ;
a) dans lequel au moins une valeur de réglage du processus est variée de manière automatisée;
b) dans lequel pour une valeur de réglage du processus variée au moins une variante d'une valeur caractéristique du processus (KE', KE", KE‴) est déterminée de manière automatisée ;
c) dans lequel on vérifie de manière automatisée si la variante d'une valeur caractéristique du processus (KE', KE", KE‴) déterminée se situe dans une limite de stabilité (SG) du processus et si elle est stable dans le processus ;
dans lequel, si une décision décide qu'il n'existe pas de stabilité du processus, l'étape du processus a) est répétée dans le cycle de production suivant avec une valeur de réglage du processus variée jusqu'à ce qu'une stabilité du processus soit atteinte;
d) dans lequel on contrôle si la caractéristique de qualité des articles produits en utilisant une valeur de réglage du processus variée se situe dans la plage de tolérance de qualité pour les articles produits et si, par conséquent, des pièces bonnes ont été produites ; et
e) dans lequel on établie de manière automatisée, en utilisant au moins une variante d'une valeur caractéristique du processus (KE', KE", KE‴) déterminée qui est stable dans le processus et dont la valeur de réglage du processus conduit à la production de pièces bonnes, une zone de valeur caractéristique du processus (EO),
dans lequel ladite zone de valeur caractéristique du processus (EO) est un masque de contrôle pour un cycle de production du processus de production en cours dans lequel au moins une valeur caractéristique du processus (KE) est déterminée à partir de données de capteur,
dans lequel on surveille si la valeur caractéristique du processus (KE) déterminée se situe dans la zone de valeur caractéristique du processus (EO) est dans lequel, si la valeur caractéristique du processus (KE) déterminée se situe dans la zone de valeur caractéristique du processus (EO), une information de surveillance est donnée indiquant que le cycle de production produit des pièces bonnes.

2. Procédé selon la revendication 1, **caractérisé en ce qu'**une première valeur limite de la zone de valeur caractéristique du processus (EO`) de la zone de valeur caractéristique du processus (EO) est déterminée en utilisant une variante d'une valeur caractéristique du processus (KE', KE") qui est la plus petite par rapport à une dimension d'une valeur caractéristique du processus ; et/ou **en ce qu'**une deuxième valeur limite de la zone de valeur caractéristique du processus (EO") de la zone de valeur caractéristique du processus (EO) est déterminée en utilisant une variante d'une valeur caractéristique du processus (KE', KE") qui est la plus grande par rapport à une dimension de la valeur caractéristique du processus.

3. Procédé selon l'une quelconque des revendications 1 ou 2, **caractérisé en ce qu'**il existe, pour une valeur de réglage du processus variée, au moins une variante d'une valeur caractéristique du processus (KS', KS") qui est stable dans le processus, où ladite variante d'une valeur caractéristique du processus (KS', KS") stable dans le processus est utilisée pour établir au moins une limite de stabilité (SG) du processus dans une procédure de sélection statistique.

4. Procédé selon la revendication 3, **caractérisé en ce qu'**une valeur de réglage du processus est prédéterminée, ladite valeur de réglage du processus étant corrélée à au moins une valeur caractéristique du processus (K), ladite valeur caractéristique du processus (K) étant également prédéterminé, et **en ce que** ladite variante d'une valeur caractéristique du processus (KS', KS") stable dans le processus est déterminée à partir des données de capteur.

5. Procédé selon la revendication 3, **caractérisé en ce que** ladite valeur caractéristique du processus (K) prédéterminé et ladite variante d'une valeur caractéristique du processus (KS', KS") stable dans le processus sont utilisées pour calculer une moyenne arithmétique (M) et un écart type (σP, σt) ; **en ce que** la moyenne arithmétique (M) est positionnée au centre d'un ellipsoïde ; et **en ce qu'**on détermine, en utilisant l'écart type (σP, σt), la longueur ou un multiple de la longueur des demi-axes de l'ellipsoïde ; et **en ce que** la limite de stabilité (SG) du processus est calculé en utilisant un périmètre de l'ellipsoïde.

6. Procédé selon l'une quelconque des revendications 3 à 5, **caractérisé en ce que** la contrôle de la production de pièces bonnes n'est effectuée que pour les articles produits dont la valeur de réglage du processus variée est corrélée à une variante d'une valeur caractéristique du processus (KS', KS") qui est stable dans le processus.

7. Procédé selon la revendication 6, **caractérisé en ce que,** si la valeur caractéristique du processus (KE) déterminée se situe localement dans la zone de valeur caractéristique du processus (EO), une information de surveillance est donnée indiquant que le cycle de production produit des pièces bonnes.

8. Procédé selon la revendication 6, **caractérisé en ce qu'**une évolution de la valeur caractéristique du processus (KE) déterminée dans le temps est représentée graphiquement ; **en ce que** la représentation graphique de la valeur caractéristique du processus (KE) déterminée est superposée à la zone de valeur caractéristique du processus (EO) ; **en ce que** l'on surveille si ladite représentation graphique de la valeur caractéristique du processus (KE) déterminée se situe localement dans la zone de valeur caractéristique du processus (EO) ; et **en ce que**, si la représentation graphique de la valeur caractéristique du processus (KE) déterminée se situe localement dans la zone de valeur caractéristique du processus (EO), une information de surveillance est donnée informant que le cycle de production produit des pièces bonnes.

9. Procédé selon la revendication 8, **caractérisé en ce que** pour un cycle de production du processus de production en cours, les pressions de cavité sont utilisées en tant que valeur caractéristique du processus (KE) ; **en ce que** l'évolution des pressions de cavité détectées dans le temps est représentée graphiquement sous la forme d'une courbe de pression de cavité (PGE) ; **en ce que** la courbe de pression de cavité (PGE) est superposée à la zone de valeur caractéristique du processus (EO) ; **en ce que** l'on surveille si la courbe de pression de cavité (PGE) se situe localement dans la zone de valeur caractéristique du processus (EO) ; et **en ce que**, si la courbe de pression de cavité (PGE) se situe localement dans la zone de valeur caractéristique du processus (EO, une information de surveillance est donnée indiquant que le cycle de production produit des pièces bonnes.

10. Procédé selon l'une quelconque des revendications 7 à 9, **caractérisé en ce que** l'on surveille si la représentation graphique de la valeur caractéristique du processus (KE) déterminée coupe au moins une valeur limite de la zone de valeur caractéristique du processus (EO', EO", EO‴).

11. Procédé selon l'une quelconque des revendications 1 à 10, **caractérisé en ce que** le processus de production est un processus de moulage par injection dans lequel une vitesse d'injection et/ou une pression de maintien est utilisée en tant que valeur de réglage du processus prédéterminée et dans lequel des pièces de moulage par injection sont produites en tant qu'articles.

12. Procédé selon la revendication 11, **caractérisé en ce qu'**une valeur maximale de la pression de cavité (PM, PM', PM", PM‴, PME) et/ou une pente de la pression de cavité (PS, PS', PS", PS‴, PSE) est utilisée en tant que valeur caractéristique du processus.

13. Procédé selon la revendication 11, **caractérisé en ce que** pour contrôler le remplissage complète de la cavité du moule (Short Shot) dans la production de pièces de moulage par injection on utilise une zone de valeur caractéristique du processus (EO) polygonale avec la valeur maximale de la pression de cavité (PM, PM', PM", PM‴, PME) en tant que valeur caractéristique du processus.

14. Procédé selon la revendication 11, **caractérisé en ce que** pour contrôler la précision dimensionnelle des pièces de moulage par injection produites et/ou la taille des pièces de moulage par injection produites et/ou la formation de bavures sur les pièces de moulage par injection produites, on utilise une zone de valeur caractéristique du processus (EO) polygonale avec la valeur maximale de la pression de cavité (PM, PM', PM", PM‴, PME) en tant que valeur caractéristique du processus ou avec la pente de la pression de cavité (PS, PS', PS'', PS''', PSE) en tant que valeur caractéristique du processus.
